Europäisches Patentamt

European Patent Office

Office européen des brevets

(11) Publication number: **0 239 374 B1**

# EUROPEAN PATENT SPECIFICATION

(45) Date of publication of patent specification: **22.01.92**  (51) Int. Cl.⁵: **H01J  61/52**, **C23C 16/48**

(21) Application number: **87302553.0**

(22) Date of filing: **24.03.87**

(54) Source of ultraviolet rays and use of the same in photochemical reaction methods.

(30) Priority: **24.03.86 JP 65515/86**
**24.09.86 JP 226449/86**

(43) Date of publication of application:
**30.09.87 Bulletin  87/40**

(45) Publication of the grant of the patent:
**22.01.92 Bulletin  92/04**

(84) Designated Contracting States:
**DE FR GB**

(56) References cited:
**EP-A- 0 173 962**
**WO-A-86/00938**
**US-A- 3 983 385**
**US-A- 4 295 074**

**Patent Abstracts of Japan, unexamined applications, E section, vol. 7, no. 140, June 18, 1983, The Patent Office Japanese Government, page 31 E 182**

**Patent Abstracts of Japan, unexamined applications, C section, vol. 10, no. 43, February 20, 1986, The Patent Offce Japanese Government, page 72 C 329**

(73) Proprietor: **SEMICONDUCTOR ENERGY LABORATORY CO., LTD.**
**398 Hase**
**Atsugi-shi Kanagawa-ken, 243(JP)**

(72) Inventor: **Yamazaki, Shunpei**
**21-21, Kitakarasuyama 7-Chome Setagaya-Ku**
**Tokyo 157(JP)**
Inventor: **Inujima, Takashi**
**1-29-2-204 Morinosato**
**Atsugi-Shi Kanagawa-Ken 243(JP)**
Inventor: **Urata, Kazuo**
**Terrace Hase 13-10 381-1, Hase**
**Atsugi-Shi Kanagawa-Ken 243(JP)**
Inventor: **Tashiro, Mamoru**
**Pearl House 201 3-25-20, Soshigaya**
**Setagaya-Ku**
**Tokyo 157(JP)**
Inventor: **Tanamura, Yuji**
**1-13-18, Naruse**
**Machida-Shi Tokyo 194(JP)**
Inventor: **Imato, Shinji**
**Flat Atsugi 303 931-1, Hase**
**Atsugi-shi Kanagawa-Ken, 243(JP)**

Inventor: **Itoh, Kenji**
**Daini Tachiki Building 202 1-12-17,**
**Nakamachi**
**Machida-Shi Tokyo 194(JP)**
Inventor: **Odaka, Seiichi**
**TDK Matsukazeryo A401 Kanmuriishihita**
**Hisakata-Machi Akita-ken, 018-01(JP)**
Inventor: **Hayashi, Shigenori**
**Flat Atsugi 201 931-1, Hase**
**Atsugi-Shi Kanagawa-Ken, 243(JP)**
Inventor: **Hirose, Naoki**
**Flat Atsugi 205 931-1, Hase**
**Atsugi-Shi Kanagawa-Ken 243(JP)**

(74) Representative: **Milhench, Howard Leslie et al**
**R.G.C. Jenkins & Co. 26 Caxton Street**
**London SW1H 0RJ(GB)**

## Description

The present invention relates to an improved source of ultraviolet rays and to the use of such an improved UV source in photochemical reactions. More particularly, though not exclusively, the invention concerns the use of UV sources in vapor phase reaction methods utilizing optical excitation for forming a covering film on a surface or for etching a surface.

The optical CVD method is a known thin film formation technique which utilizes vapor phase reactions. In use of the optical CVD method for chemically forming a thin film on a surface, reactive gases are activated and decomposed by means of optical excitation. As compared with the alternative thermal CVD and plasma CVD methods, the optical CVD method is advantageous in that it enables film formation to be effected at low temperatures and it does not damage the formed surface.

However, it has hitherto not been possible by use of the optical CVD method to form a film with a sufficiently large thickness beyond a certain limiting value nor to form a film at a high enough speed of film growth, due to the formation of a film on the surface of a window provided between the ultraviolet source and the reaction chamber. In the case of optical CVD formation of silicon nitride film, the limiting film thickness that can be formed is 1000Å. In practice, however, if the thickness limit could be raised to at least 2000Å, then the optical CVD method would become industrially applicable to the formation of passivation film and also to the formation of reflection preventive films and gate insulating films. For this reason, much effort has been made to develop an optical CVD method of achieving thicker films.

In order to resolve the abovementioned problems, the present invention proposes to optimize the intensity, at a surface to be irradiated, of a source of ultraviolet rays for use in photochemical reactions in the optical CVD method or optical etching method.

According to the present invention there is provided a lower pressure ultraviolet source comprising:

a discharge tube; anode and cathode electrodes provided in said tube for establishing an electrical discharge therein at a discharge region defined between said electrodes; a reservoir communicating with said tube at a location spaced from the heat developed at said discharge region; means associated with said reservoir for controlling the temperature thereof; and an active substance in said reservoir in liquid form and with vapour of said substance filling the discharge region so as to emit ultraviolet radiation when excited by an electric discharge between said electrodes; wherein the amount of said active substance, that is contained in liquid form in said reservoir, is such that the vapour pressure of said vaporous substance within the tube is the saturated vapour pressure of the temperature-controlled liquid substance in the reservoir and is determined by the temperature of the reservoir and not by the operating temperature of the discharge tube.

An ultraviolet source comprising a discharge tube; anode and cathode electrodes provided in said tube for establishing an electrical discharge therein at a discharge region defined between said electrodes; a reservoir communicating with said tube at a location spaced from the heat developed at said discharge region; means associated with said reservoir for controlling the temperature thereof; and an active substance in said reservoir in liquid form and with vapour of said substance filling the discharge region so as to emit ultraviolet radiation when excited by an electric discharge between said electrodes; is known from US-A-4,295,074. However the mercury arc lamp of this prior art document is a high pressure lamp designed to operate at pressures of up to 100 times atmospheric pressure whereas the present invention comprises a low pressure (vacuum) source, and furthermore the mercury arc lamp of this prior art document is of a kind in which pools of mercury are located at the electrodes so that the vapour pressure in the lamp is determined by the heat of the arc at the electrodes vaporizing the mercury at the surfaces of the pools. The reservoir is filled with mercury in liquid communication with one of the electrode pools and control of the reservoir temperature is effected to control the heating of the mercury in the pool by the arc discharge thereby to enable the lamp impedance to be controlled for increasing the useful life of the lamp. The inventors of US-A-4,295,074 did not address themselves to the problems which the present invention addresses and did not contemplate the solution proposed by the present invention which, as will be explained hereinafter, enables the output intensity of a low pressure discharge tube to be adjusted by control of the vapour pressure through control of the reservoir temperature. The intensity of the light emitted from a mercury lamp depends ont the mercury pressure and the mercury pressure has conventionally been automatically fixed at the saturated vapor pressure of mercury, because an excess amount of mercury has conventionally been contained in the lamp enclosure in order to compensate for losses. The prior art thus has not appreciated the advantages that the present invention obtains.

An embodiment of the present invention comprising a low pressure mercury lamp further proposes that the electrodes provided for sustaining the arc discharge are forcibly cooled at their lead-in terminals. Furthermore, a synthetic quartz glass tube surrounds the electrodes, steps are taken to prevent consumption of electrode material, especially of the material of the electrodes that are on the side which is hit by discharge ions, and steps are taken also to realize a flow of current in the lamp which is greater than in the prior art. The invention thus enables the emission intensity of mercury lamp radiation of wavelength 185 nm to be increased to a value which is more than twice that obtainable in the prior art.

More generally, the invention enables the intensity of the UV radiations that are emitted in transitions of mercury atoms from the states to which they are excited by the arc discharge within a low pressure mercury lamp to their ground state (namely the radiations of 185 nm and 254 nm that are generated in the transitions $6^1P_1$-$6^1So$ and $6^3P_1$-$6^1So$) to be increased, and further enables the intensity of the ultraviolet rays to be increased at the surface to be irradiated. In this way, the present invention promotes the formation of a covering film on a formation surface through excitation or activation of reactive gases in a reaction chamber by ultraviolet rays, especially though not exclusively those of the wavelengths above mentioned.

By virtue of the fact that the present invention enables high intensity short wavelength ultraviolet rays of 185 nm to be irradiated to a forming surface of a substrate, even without need for coating the irradiating window with oil or the like to inhibit film formation thereon, it has been found possible to improve the limiting thickness of a formed film of silicon nitride above the prior value of 1000Å. In similar manner it has been found possible to obtain, by means of an optical CVD method alone, a film thickness which is sufficient to form a reflection preventive film of a compound semiconductor such as InP, a gate insulating film of a thin film type silicon semiconductor element, and a passivation film of a compound semiconductor such as GaAs.

Furthermore, the present invention enables an oil-free reaction system to be used which makes absolutely no use of Fomblin (a proprietary type of oil) or the like on the irradiating window, so that the background vacuum level can be increased to less than $133.3 \times 10^{-7}$ Pa ($10^{-7}$ Torr). Moreover, the present invention enables the formation by optical CVD of films of semiconductor material such as silicon, of insulating films such as silicon oxide, silicon nitride, aluminium nitride, phosphorus glass and boron glass, and conductor films of metals such as aluminium, titanium and tungsten or of silicides of these metals.

Further features of the present invention are set forth in the appended claims and will become clear to those possessed of relevant skills from consideration of the following detailed description of exemplary embodiments made with reference to the accompanying drawings wherein:

Fig. 1 is a diagram which schematically illustrates an exemplary optical CVD system which can take advantage of the present invention;

Fig. 2 is a diagram which schematically illustrates an exemplary source of ultraviolet rays incorporating some of the features of the present invention;

Fig. 3 is a diagram which shows the dependence of the thickness of silicon nitride films that are formed by use of an ultraviolet source according to the present invention on the distance between the irradiating window and the formed surface;

Fig. 4 is a partial section view schematically showing the provision of an excess mercury reservoir in a source of UV rays according to the invention; and

Figs. 5(A) to 5(C) are graphical views showing the relationship between the temperature of the excess mercury in the reservoir of the UV source of Fig. 4 and the intensity of the ultraviolet rays.

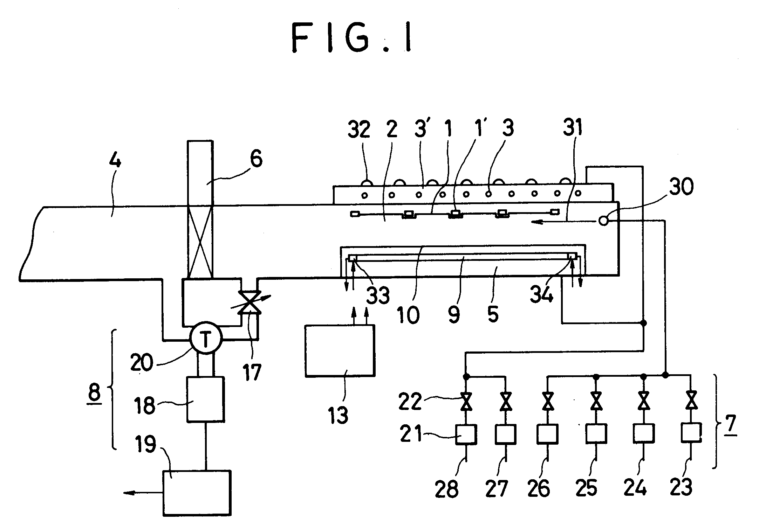

Making reference to the CVD system shown in Fig. 1, substrates 1 which have formation surfaces are held by a holder 1' and are placed in a reaction chamber 2. In the proximity of and above the substrates, there is provided a halogen heater 3, the upper surface of which is cooled by means of water circulation conduits 32, within a heating chamber 3'. Below the reaction chamber 2 there is provided a light source chamber 5 which contains a large number of ultraviolet ray sources 9 that each consist of a low pressure mercury lamp of a type hereinafter described which receive electric energy from a power supply 13. The light source chamber 5 and the heating chamber 3' are held at approximately equal degrees of vacuum, each having a pressure difference of less than 1333.22 Pa (10 Torr) between the pressure of the reaction chamber 2'. For that purpose, a nonproduct gas (such as nitrogen, hydrogen, helium, or argon) is supplied from the gas source 27 or 28 to the light source chamber 5 and to the heating chamber 3' through a flow meter 21 and a valve 22.

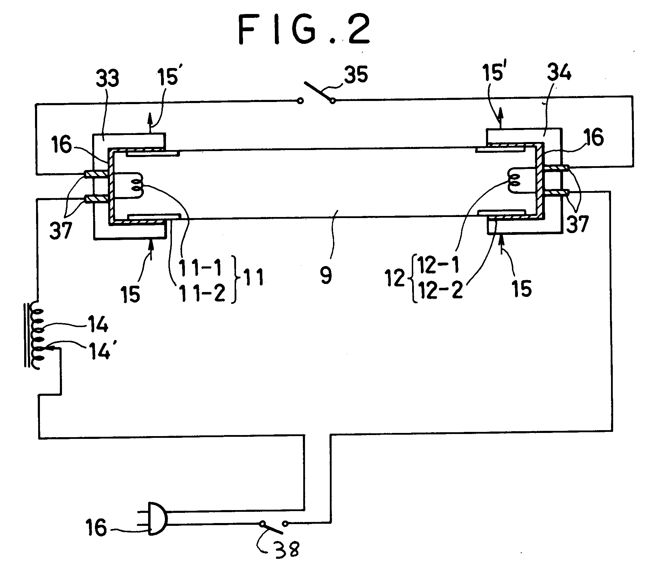

In Fig. 2 there is shown a low pressure arc discharge mercury lamp which incorporates features of the present invention and which serves as a source of ultraviolet rays used in the vapor phase reaction apparatus of Fig. 1. The low pressure arc discharge mercury lamp 9 shown in Fig. 2 has a pair of electrodes 11 and 12 which are described more fully hereinafter. Argon gas and mercury are sealed inside of a tube made of synthetic quartz which is held in a reduced pressure state.

A choke coil 14 is provided for impressing a voltage between the electrodes which is sufficient as an initial starting voltage, by shifting the phase by a small amount. First, a switch 35 and a switch 38 is turned on to cause a current to flow in the circuit and heat the filaments 11-1 and 12-1 in order to facilitate the emission of thermal electrons. Then, the switch 35 is turned off, and an arc discharge is caused to take place between the electrodes 11 and 12 by virtue of the high voltage which is generated between the ends of the choke coil. Namely, a discharge is started by a current which flows from the electrodes 11-1 and 11-2 to the electrodes 12-1 and 12-2.

Next, the inductance of the choke coil is reduced and the current that flows between the pairs of electrodes 11 and 12 can be made large since the arc discharge has a negative resistance. Since the heat generated in the electrodes is proportional to the square of the current that is flowing, the lead-in terminals 37 are cooled by introducing a cooling medium into enclosures 33 and 34 via inlets 15 and draining it from outlets 15', in order to cool the electrodes 11 and 12. Generally, water is used as a cooling medium. However, freon or the like may for example be used as a cooling medium.

In general, for efficient electron emission, the filaments 11-1 and 12-1 should be coated with a material such as BaO which has a small work function. However, such a material has weak anti-shock properties and is easily destroyed by the collisions of atoms such as of argon and mercury. Because of this, electrodes 11-2 and 12-2 that are not coated with BaO are used as anti-shock electrodes, the electrodes 11-2 and 12-2 being electrically connected to the filaments 11-1 and 12-1 as will be appreciated by those skilled in the arc discharge tube art. In the present invention, the electrodes 11-2 and 12-2 are each in the form of a ring close to or adjacent to the inner wall of the tube 9. The electrodes are forcibly cooled from outside of the tube, so that overheating of the electrodes 11-2 and 12-2 can be prevented and it becomes possible for the arc discharge to sustain a current which is about twice as large as that of the prior art. As a result, in spite of the large current it is possible to obtain a lamp life of at least close to 2,500 hours with the lamp output decreasing over this period by less than 10% of the initial lamp output.

Furthermore, in order to sufficiently improve the heat conductivity between the forced cooling means 33, 34 and the current lead-in terminals 35 and the outer wall of the tube in the proximity of the electrodes, these parts are sealed to each other by means of a heat conductive paste.

With the above arrangement, it is possible to hold a maximum pressure by keeping the temperature rise within the tube at a value of 40°C, for example, of the design specifications. When in the vapor phase apparatus of Fig. 1 the source of ultraviolet rays 9 itself is heated by the heat from the heater 3 for the substrate, it is of course effective to provide water cooling tubes that are disposed linearly beneath the tube 9 and close to each other.

In the case of manufacturing semiconductors such as silicon as a reaction product by means of the apparatus shown in Fig. 1, use may be made of silanes ($Si_nH_{2n+2}$, $N \geq 2$) that are gases of silicides or silicon halides ($H_xSi_2F_{6-x}(x=0-5)$, $H_xSi_2C_{6-x}(x=0-5)$, $H_xSi_3F_{8-x}(x=0-8)$, $H_xSi_3Cl_{8-x}(x=0-8)$), and the like as the product gases. In addition, use may be made of hydrogen, nitrogen, argon, or helium as a carrier gas for the nonproduct gases.

In the case of manufacturing a nitride (silicon nitride, aluminium nitride, gallium nitride, indium nitride, antimony nitride, or the like) as a reaction product, use may be made respectively of $Si_2H_6$, $Al(CH_3)_3$, $Ga(CH_3)_3$, $In(CH_3)_3$, $Sn(CH_3)_4$, and $Sb(CH_3)_3$ as a reaction product, which is supplied from gas source 23. In addition, as a nonproduct gas which participates in the reaction, use may be made of ammonia or hydrazine which is supplied from gas source 26. Further, a nonproduct gas (hydrogen or helium) which does not participate in the reaction may be supplied from sources 24 and 28 as a carrier gas.

In the case of manufacturing an oxide (silicon oxide, phosphorus glass, boron glass, aluminum oxide, indium oxide, tin oxide, or their mixture) as a reaction product, use may be made of an oxide ($N_2O, O_2$, NO, or $NO_2$) as a product gas which participates in the reaction that is supplied from gas source 26. In this case, a silicide ($Si_2H_6$, $Si_2F_6$, or $Si_2Cl_6$), aluminum compound ($Al(CH_3)_3$) or $Al(C_2H_5)_3$), indium compound ($In(CH_3)_3$ or $In(C_2H_5)_3$), tin compound ($Sn(CH_3)_4$ or $Sn(C_2H_5)_4$) antimony compound ($Sb(CH_3)_3$ or $Sb(C_2H_5)_3$), respectively, may be made use of as a product gas which is supplied from gas source 23. In addition, hydrogen or helium as a nonproduct gas which does not participate in the reaction may be supplied from source 24 as a carrier gas. Further, phosphine ($PH_3$) and diborane ($B_2H_6$) may be supplied from source 25.

In the case of manufacturing a conductor (aluminium, tungsten, molybdenum, tin, or a silicide of each), use may be made of hydrogen, argon, or helium as a nonproduct gas. In addition, $Al(CH_3)_3$, $WF_6$, $W(C_2H_5)_5$, $MoCl_5$, $Mo(CH_3)_5$, $TiCl_4$, $Ti(CH_3)_4$, or a mixture of each of these and $SiH_4$, $Si_2F_6$, $SiH_2Cl_2$, or $SiF_4$, may be used respectively as a product gas, being supplied from sources 23 and 24. Further, hydrogen which is a nonproduct gas that does not participate in the reaction may be supplied from sources 25 and 27 as a carrier gas.

Pressure control for the reaction chamber is accomplished by exhausting the gas through a turbo molecular pump (such as the PG550 pump manufactured by Osaka Vacuum Co., Ltd.) 18 and a rotary pump 19 via a control valve 17 and a cook 20. For pumping down a reserve chamber 4 by the exhaust system 8, the reserve chamber side of the exhaust system 8 is opened and the reaction chamber side is closed by means of the cook 20. On the other hand, for pumping, or for causing photochemical reactions in, the reaction chamber, the reaction chamber side is opened and the reserve chamber side is closed.

In the process of film formation, a load and lock system which will not give rise to a pressure difference during transporation of a substrate from the reserve chamber to the reaction chamber may be adopted. First, the reserve chamber is pumped following insertion and dispostion of a substrate 1 and a holder 1' in the reserve chamber. Then, the substrate 1 and the holder 1' are moved into the reaction chamber 2 which is pumped to a vacuum of $133.3 \ 10^{-7}$ Pa ($10^{-7}$ Torr) or less by opening a gate valve 6 which is provided between the reserve and reaction chambers. The reaction chamber 2 and the reserve chamber 4 are partitioned again by closing the gate valve 6.

Following that, a nonproduct gas is introduced into the light source chamber and the heating chamber at a flow-rate of 100 to 1,500 cc/min, in order to prevent mixing of reactive gases in the light source chamber due to reverse flow. At the same time, a nonproduct gas, for example $NH_3$, which participates in the reaction is supplied to the reaction chamber. The system is left standing in that state for about 30 minutes to cause photoetching of a formed surface of the substrate by active hydrogen and fluorine that are generated in the photodecomposition of the gases. With this arrangement, etching by irradiation becomes possible as a result of removal of oxides from the formed surface, leaving the surface nice and clean. Following that, a product gas selected from the available reactive gases is supplied to the reaction chamber through a nozzle 30.

As a light source for enabling the photochemical reaction, use is made of low pressure arc discharge mercury lamps 9 made of a synthetic quartz tube, and equipped with forced cooling means 33 and 34 as previously described. The source of ultraviolet rays might for example consist of 16 low pressure mercury lamps capable of emitting UV radiation at wavelengths of 185 nm and 254 nm, and having an emission length of 40 cm, an irradiation intensity of 60 to 100 $mW/cm^2$, and a lamp power of 150 to 500 W.

The ultraviolet rays from the source irradiate the reaction gases 31 and the forming surface 1' of the substrate 1 in the reaction space of the reaction chamber 2, through a transparent covering plate 10 made of synthetic quartz. The heater 3 is of "deposition up" type and is placed on the upper side of the reaction chamber 2. By such an arrangement, it is possible to avoid generation of a cause for creating pin holes through attachment of flakes on the forming surface. The substrate 1 is heated by the halogen heater to a predetermined temperature in the range between room temperature and 700$^\circ$ C. The reaction chamber is made of stainless steel. The source of ultraviolet rays is housed in a light source chamber which is held in a vacuum. The light source chamber and the reaction chamber are held under a reduced atmosphere, surrounded by a stainless steel container. Because of this, it is possible with no technical difficulty to form a film on a large substrate of a size such as 30cm x 30cm instead of a small area of film formation of 5cm x 5cm.

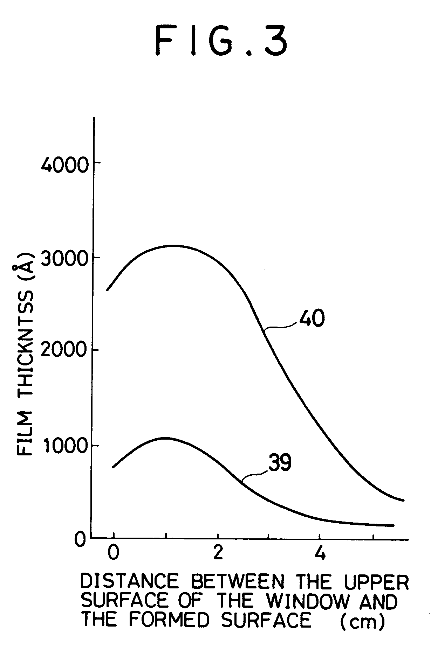

In use of the apparatus of Fig. 1 in the formation of silicon nitride films, for example, ammonia was supplied from source 25 at a rate of 200 cc/min and disilane was supplied from source 23 at a rate of 20 cc/min, as reactive gases. By setting the substrate temperature at 350$^\circ$ C, a result as shown by the curve 40 of Fig. 3 was obtained. The substrate used was 4 wafers with diameter of 12.7 cm (5 inches). The pressure within the reaction chamber was 1333.22 Pa (10.0 Torr). As a nonproduct gas which does not participate in the reaction, nitrogen was introduced from source 27 at a flow rate of 200 cc/min.

With a reaction proceeding for 50 minutes, there were obtained silicon nitride films with thicknesses in the range of 1000 to 3500 Å. The intensity of ultraviolet rays of wavelength 185 nm on the forming surface was 40 $mW/cm^2$. The dependence of the thickness of the formed film on the distance between the covering plate 10 and the substrate that has a formed surface is as shown by the curve 40 in Fig. 3. It will be seen from curve 40 in Fig. 3 that a maximum thickness of 3,000Å was obtained for a 1cm distance between the upper surface of the window and the formed surface. It will be seen also that it is very important to have the distance less than 3cm, and preferably less than 2cm, in order to obtain a film thickness which is greater than 2,000Å.

As may be seen from curve 39 in Fig. 3, when use is made of well-known conventional mercury lamps, instead of using mercury lamps of the forced cooling type hereinbefore described, the intensity of ultraviolet rays cannot be raised beyond 20 $mW/cm^2$. Because of this, the maximum thickness in this case was up to 1,000Å. (For the case of a distance of 1cm from the UV source to the substrate).

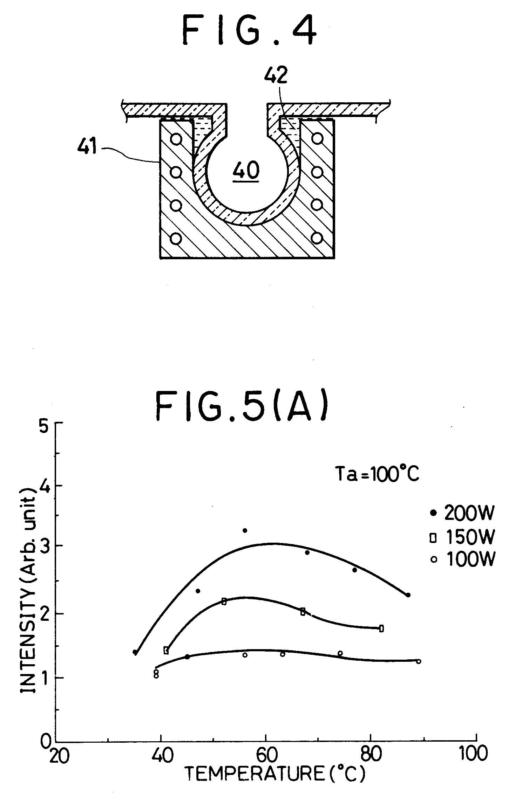

Referring now to Fig. 4, this illustrates how in a UV source according to the invention advantages can be obtained by cooling a mercury reservoir in which excess mercury is accumulated in the liquid phase. Fig. 4 is a sectional view of the reservoir which is provided on and projects from the synthetic quartz tube of the light source at a position near the end of the tube where plasma does not arise. Around the reservoir 40 there is provided a cooling device 41 with an oil layer 42 in between which makes thermal connection between the reservoir 40 and the cooling device 41. The cooling device is made from a substance having a high heat conductance such as aluminium, copper or so on, and is provided with a plurality of water conduits therethrough. The temperature of the liquid mercury in the reservoir can be adjusted by regulating the flow rate of cooling water circulating in the conduits with reference to the measured temperature of the mercury as determined by a temperature sensor (not shown in the figure) provided on the reservoir.

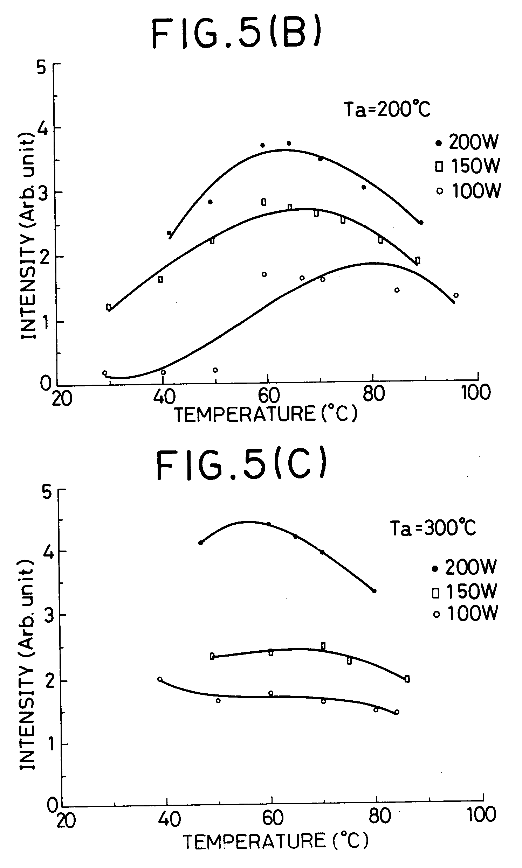

Figs. 5(A) to 5(C) show the relationship between the intensity of the light source of Fig. 4 versus the temperature of liquid mercury in the mercury reservoir with power supplies of 200W, 150W and 100W. "Ta" indicates the temperature of the tube environment, namely, the temperature of the tube of the light source. As shown in Fig. 5(A), the highest intensity can be obtained at about 60°C liquid mercury tempeature when input power is 200W and the lamp environment temperature is 100°C. When the temperature of the lamp environment is 200°C, the optimum temperatures are clearly seen from Fig. 5(B) for each input power level. The optimum temperatures, however, become unclear at 300°C lamp environment temperature as shown in Fig. 5(C). It should be understood that these figures are only examples and if one desires to know the optimum temperature to which the mercury reservoir should be cooled, then one should examine the situation for each particular case. With the configuration shown in Fig. 4, the pressure of mercury vapor in the tube is determined not by the lamp temperature but by the temperature of the mercury in the reservoir which is controlled by the cooling device.

As should be clear from the foregoing description, the present invention enables films to be successfully formed on substrates of large area by reducing consumption of electrodes of low pressure mercury lamps and by passing a large current in the lamp. As a result, it has been found possible to increase the limiting film thickness from the conventional value of 1,000Å to a value which is greater than 3,000Å. In addition, by applying a high frequency of 100 Hz to 1 kHz to the mercury lamps, and by adjusting its power factor, it was found possible to increase the emission intensity of the radiation of 185 nm wavelength. Further, according to the present invention, it is possible to obtain a maximum film thickness by choosing the distance between the transparent covering plate and the substrate surface at a value of 3cm or less, preferably 0.3 to 2cm. The present invention has made it possible to produce excellent silicon nitride films that possess interface level density of less than $3 \times 10^{11} \text{cm}^{-2}$.

In the foregoing the present invention was described in conjunction with the formation of silicon nitride films. However, various films of semiconductors, insulators, conductors, and others such as amorphous silicon films, silicon oxide films, phosphorus glass which contains these substances along with added impurities, boron glass, or aluminum, can be formed by the use of the same technical ideas. In addition, it is effective to form passivation films on iron, nickel, cobalt, or magnetic substances of their compounds, by the use of carbonyl compounds of iron, nickel, or cobalt that has not been touched upon in the foregoing as a reactive gas.

It should also be mentioned that a dopant may also be added in the formation of silicon semiconductors in the experimental example.

In addition, if environmental pollution could be disregarded, the speed of film growth may be improved by passing the reactive gases through a mercury bubbler.

In Fig. 1, the light source was placed in the lower part and the reaction space was provided in the upper part of the system. However, if flakes that are generated can be removed with reasonal ease, then the dispostion of the substrate can be facilitated by providing the reaction space in the lower part, contrary to the present embodiment. In addition, the light source may be disposed at the side of the apparatus if so desired.

The present invention is not limited to the specific embodiments explained above and many modifications and variations will occur to those skilled in the art without departing from the scope of the invention. For instance, the source of ultraviolet rays may be effectively applied to photoetching systems or other technical fields besides its application to chemical vapor deposition (CVD).

## Claims

1. A low pressure ultraviolet source comprising:
   a discharge tube (9);
   anode and cathode electrodes (11, 12) provided in said tube for establishing an electrical discharge therein at a discharge region defined between said electrodes;

a reservoir (40) communicating with said tube at a location spaced from the heat developed at said discharge region;

means (41) associated with said reservoir for controlling the temperature thereof; and

an active substance in said reservoir in liquid form and with vapour of said substance filling the discharge region so as to emit ultraviolet radiation when excited by an electric discharge between said electrodes; wherein

the amount of said active substance, that is contained in liquid form in said reservoir, is such that the vapour pressure of said vaporous substance within the tube is the saturated vapour pressure of the temperature-controlled liquid substance in the reservoir and is determined by the temperature of the reservoir and not by the operating temperature of the discharge tube.

2. An ultraviolet source as claimed in claim 1 wherein said active substance is mercury.

3. An ultraviolet source as claimed in claim 1 or 2 wherein means (15) are provided for cooling said electrodes (11, 12).

4. A photochemical apparatus including a low pressure ultraviolet source as claimed in any preceding claim.

5. An optical CVD system including a low pressure ultraviolet source as claimed in any of the preceding claims 1-3.

6. A method of operating a photochemical apparatus as claimed in claim 4 or an optical CVD system as claimed in claim 5, in accordance with which the temperature of the active substance in the reservoir of the ultraviolet source is adjusted in order to obtain optimum output intensity from the source and the vapour pressure of said substance within the discharge tube of the ultraviolet source is the saturated vapour pressure of the temperature-controlled liquid substance in the reservoir and is determined by the temperature of the reservoir and not by the operating temperature of the discharge tube.

**Revendications**

1. Source de rayonnement ultraviolet basse pression comprenant :
   - un tube à décharge (9) ;
   - des électrodes formant anode et cathode (11, 12), disposées dans ledit tube pour établir une décharge électrique à l'intérieur de celui-ci au niveau d'une région de décharge définie entre lesdites électrodes ;
   - un réservoir (40) communiquant avec ledit tube au niveau d'un emplacement distant de la chaleur développée au niveau de ladite région de décharge ;
   - des moyens (41) associés audit réservoir pour contrôler la température de celui-ci ;
   - une substance active présente dans ledit réservoir sous forme liquide, de la vapeur de ladite substance remplissant la région de décharge de façon à émettre un rayonnement ultraviolet une fois excitée par une décharge électrique entre lesdites électrodes ;

dans laquelle la quantité de ladite substance active, qui est contenue sous forme liquide dans ledit réservoir, est telle que la pression de vapeur de ladite substance à l'état de vapeur à l'intérieur du tube est la pression de vapeur saturée de la substance liquide à température contrôlée dans le réservoir et est déterminée par la température du réservoir et non par la température du fonctionnement du tube à décharge.

2. Source de rayonnement ultraviolet selon la revendication 1, dans laquelle ladite substance active est du mercure.

3. Source de rayonnement ultraviolet selon la revendication 1 ou 2, dans laquelle des moyens (15) sont prévus pour refroidir lesdites électrodes (11,12).

4. Appareil photochimique comprenant une source de rayonnement ultraviolet basse pression, telle que définie à l'une quelconque des revendications précédentes.

5. Système CVD optique comprenant une source de rayonnement ultraviolet basse pression, telle que définie à l'une quelconque des revendications précédentes 1 à 3.

6. Procédé pour faire fonctionner un appareil photochimique tel que défini à la revendication 4 ou un système CVD optique tel que défini à la revendication 5, conformément auquel la température de la substance active dans le réservoir de la source de rayonnement ultraviolet est ajustée de façon à obtenir une intensité de sortie optimale à partir de ladite source, et la pression de vapeur de ladite substance à l'intérieur du tube à décharge de la source de rayonnement ultraviolet est la pression de vapeur saturée de la substance liquide à température contrôlée dans le réservoir et est déterminée par la température du réservoir et non par la température de fonctionnement du tube à décharge.

**Patentansprüche**

1. Niederdruck-Ultraviolettquelle umfassend
   eine Entladungsröhre (9),
   in der Röhre angeordnete Anoden- und Kathodenelektroden (11, 12) zur Erzeugung einer elektrischen Entladung in der Röhre in einer zwischen den Elektroden definierten Entladungszone,
   ein Reservoir (40), das mit der Röhre an einer Stelle in Abstand von der in der Entladungszone sich entwickelnden Wärme in Verbindung steht,
   eine dem Reservoir zugeordnete Einrichtung (41) zur Steuerung von dessen Temperatur, und
   eine in dem Reservoir vorhandene aktive Substanz in flüssigem Zustand, wobei Dampf dieser Substanz die Entladungszone füllt, so daß bei Anregung einer elektrischen Entladung zwischen den Elektroden Ultraviolettstrahlung emittiert wird,
   wobei die aktive Substanz in flüssigem Zustand in dem Reservoir in einer solchen Menge vorliegt, daß der Dampfdruck der dampfförmigen Substanz innerhalb der Röhre der gesättigte Dampfdruck der temperaturgesteuerten flüssigen Substanz in dem Reservoir ist und durch die Temperatur des Reservoirs und nicht durch die Arbeitstemperatur der Entladungsröhre bestimmt ist.

2. Ultraviolettquelle nach Anspruch 1, wobei die aktive Substanz Quecksilber ist.

3. Ultraviolettquelle nach Anspruch 1 oder 2, wobei eine Einrichtung (15) zur Kühlung der Elektroden (11, 12) vorgesehen ist.

4. Photochemisches Gerät mit einer Niederdruck-Ultraviolettquelle nach einem der vorhergehenden Ansprüche.

5. Optisches CVD-System mit einer Niederdruck-Ultraviolettquelle nach einem der Ansprüche 1 bis 3.

6. Verfahren zum Betrieb eines photochemischen Geräts nach Anspruch 4 oder eines optischen CVD-Systems nach Anspruch 5, gemäß dem die Temperatur der aktiven Substanz in dem Reservoir der Ultraviolettquelle so eingestellt wird, daß optimale Ausgangsintensität der Quelle erzielt wird, und der Dampfdruck der Substanz innerhalb der Entladungsröhre der Ultraviolettquelle der gesättigte Dampfdruck der temperaturgesteuerten flüssigen Substanz in dem Reservoir ist und durch die Temperatur des Reservoirs und nicht die Betriebstemperatur der Entladungsröhre bestimmt wird.

FIG.1

# FIG. 2

# FIG.3

Graph: X-axis labeled "DISTANCE BETWEEN THE UPPER SURFACE OF THE WINDOW AND THE FORMED SURFACE (cm)" with values 0, 2, 4. Y-axis labeled "FILM THICKNTSS (Å)" with values 0, 1000, 2000, 3000, 4000. Two curves labeled 40 and 39.

# FIG. 4

# FIG.5(A)

# FIG.5(B)

# FIG.5(C)